# EUROPEAN PATENT SPECIFICATION

(11) **EP 0 655 186 B1**
(45) Date of publication and mention of the grant of the patent: **29.04.1998**
(21) Application number: 94610053.4
(22) Date of filing: 23.11.1994
(51) Int. Cl.: A01B 73/00

(54) **A suspended implement**
Angehängtes Gerät
Outil suspendu

(30) Priority: 26.11.1993 DK 132793
(43) Date of publication of application: 31.05.1995
(73) Proprietor: JF-FABRIKEN - J. FREUDENDAHL A/S, DK-6400 Sonderborg (DK)
(72) Inventor: Freudendahl, Jorn, DK-6400 Sonderborg (DK); Skau, Ole, DK-6440 Augustenborg (DK)
(74) Representative: Raffnsöe, Knud Rosenstand

(56) References cited:
- EP-A- 0 426 588
- DE-A- 1 582 356
- FR-A- 2 282 781
- GB-A- 2 119 618
- GB-A- 2 157 936

## Description

The present invention relates to an implement of the type which close to a vertical plane through the mass centre of the implement is hinged to a carrier arm for pivoting around an axis transverse to the carrier arm and which comprises a stopping device for preventing said pivoting, the carrier arm being hinged to a frame connectable with a tractor for swinging between an operating position and a transport position, wherein the stopping device comprises a first member fastened to the implement and a second member fastened to the carrier arm, the two members are mutually engaging in such a way that they and in particular their connections with the implement and the carrier arm, respectively, are movable relative to each other between two extreme positions, and that they are adapted to take up a mutual position, in which they block the movement. An implement of this art is known from DE-A-1 582 356.

An implement of the above type is a lift-suspended mower. Such a mower generally comprises several rotating knife means placed in a row and is pivotally suspended in a carrier arm for being adjustable during operation to the surface of a field to be mowed. The mower in question is adapted in view of transport to be swung with its carrier arm to a raised position behind the vehicle, for instance a tractor, on which it is mounted. For such transport the uncontrolled swinging in relation to the carrier arm is undesirable, and the implement therefore comprises a stopping device, by means of which the mower can be locked relative to the carrier arm. However, the known stopping devices suffer from the drawback that they are manually operated and requires that the driver of the tractor leaves the tractor when switching to a transport position in order to activate the stopping device and consequently lock the mower relative to the carrier arm.

The object of the invention is to provide an implement of the type mentioned by way of introduction, in which implement the stopping device is automatically activated, when the implement is switched to a transport position.

From GB-A-2 157 936 is known a lift-suspended mower which at one side is hinged to a carrier arm for pivoting around an axis transverse to the carrier arm and which comprises a stopping device for preventing said pivoting. The stopping device comprises a sliding bolt and the possibility of automatically moving the sliding bolt to an unlocked position when the implement is in a mowing position is mentioned. However an enabling disclosure is not given.

The object is met in that the stopping device comprises an activating means comprising a string which when pulled acts on at least one of the two members in a direction towards the position, in which the movement is blocked, said string being connected with the frame in such a way that it is pulled when the carrier arm is swung to the transport position. Hereby is achieved that the implement can move freely between the extreme positions, which will correspond to the requirement during operation, while the implement, if the activating means is activated during transport, will be locked by the stopping device.

The stopping device preferably comprises a spring which acts on at least one of the two members in a direction away from the position, in which the movement is blocked. Hereby the stopping device is prevented from indadvertently blocking the movement, for instance during operation.

In an embodiment one of the two members comprises a track with a long leg and a short leg substantially perpendicular to one another, and said member is hinged to the implement or the carrier arm in such a way that the long leg of the track extends towards the hinge axis of the member and the short leg of the track extends transversely to the hinge axis of the member, and the second member comprises a pin adapted to engage the track, said pin being stationary relative to the carrier arm or the implement.

The invention will be described in detail in the following by means of embodiments with reference to the drawing, in which
Fig. 1 shows a lift-suspended mower in operating position,
Fig. 2 the same mower in transport position, and
Fig. 3 a view corresponding to Fig. 2, but showing a different embodiment of the stopping device.

The drawing shows a mower 1 with two knife drums 2 suspended in a machine frame 3. The machine frame 3 is by means of a centrally placed hinge 4, the axis of which extends substantially horizontally in the operating position of the mower, suspended in a carrier arm 5, which is in turn hinged to a carrier frame 6 around a vertical axis 7. The carrier frame 6 may for instance be fastened to the rear lift arms of a tractor.

By moving the carrier frame up and down the mower 1 may be moved between a lower operating position and an upper transport position with free height above the ground. While the mower 1 in its operating position normally will be swung to the side of the tractor, it will in the transport position be swung behind the tractor, which in the figures can be seen from the position of the carrier frame 6 relative to the mover.

While it is desirable that the mower during operation may swing freely in its hinge 4, such a movement is undesirable during transport. The mower 1 is therefore provided with a stopping device for blocking said movement during transport.

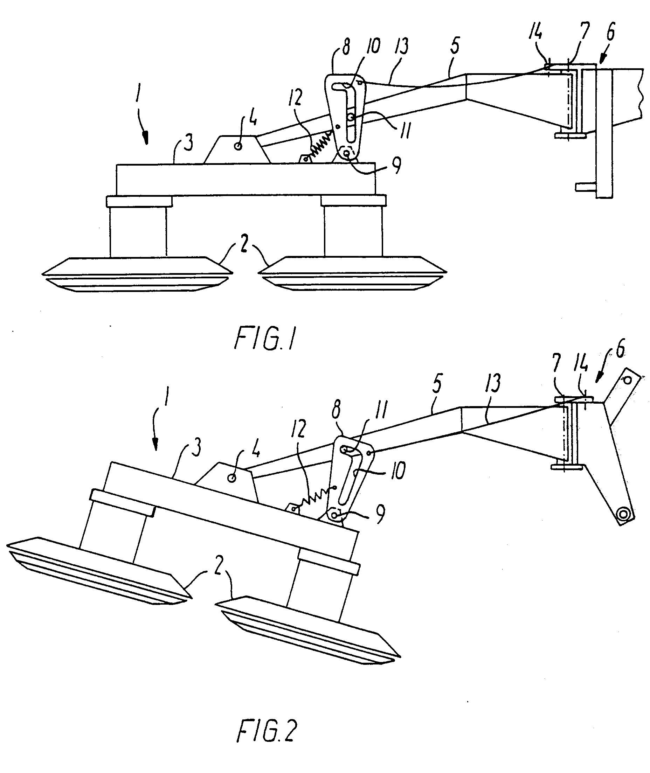

The stopping device comprises in the embodiment shown in Figs. 1 and 2 a plate 8 fastended to the machine frame 3 by means of a hinge 9, the axis of which is substantially parallel with the axis of the hinge 4. The plate 8 comprises an L-shaped track 10 engaging a pin 11 fastened to the carrier arm 5. A spring 12 acts on the plate 8 in a direction away from the carrier frame, whereas a string 13 is fastenend to the carrier frame 6 in a point 14, which is situated in such a way relative to the axis 7 that by swinging the mower from the operating position shown in Fig. 1 to the transport position shown in Fig. 2 a pull is exerted in the string 13 so that the plate is loaded in a direction towards the carrier frame 6. The string is preferably resilient to prevent it from breaking in case of overloading. If the string is a wire, the resiliency is for instance attained by inserting a spring which has to be stronger than the spring 12 in order to overcome the spring power of the latter.

Hereby is achieved that the pin 11, when the mower is in its operating position, may move freely upwards and downwards in the long leg of the track 10, whereas in the transport position shown in Fig. 2 it is locked in the short leg of the track 10, the swinging movement of the mower 1 in the hinge 4 being also blocked thereby.

In the embodiment shown in Figs. 1 and 2, the mower 1 will automatically swing to the oblique position shown in Fig. 2, when it is lifted to the transport position on account of imbalance relative to the hinge 4. Thereby the pin 11 becomes relatively displaced in the track 10 against the corner of the L and will likewise move relatively into the short leg of the L, when, on account of the swinging to the operating position behind the tractor, the string 13 is pulled.

In a variant of the embodiment shown in Figs. 1 and 2, the mower is balanced in such a way that it hangs horizontally when it is in its raised position. The track will in that case be shaped in such a way that the short leg extends somewhere from the middle of the long leg instead of extending from one end of the long leg.

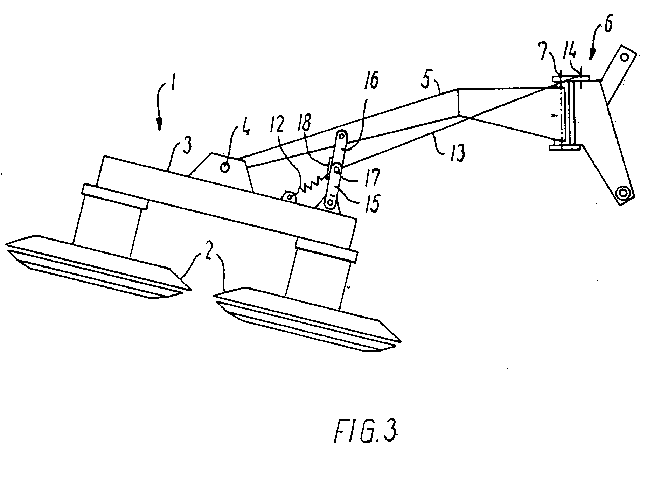

Fig. 3 shows another embodiment, in which the stopping device comprises two arms 15, 16 which are hinged together in the point 17 and are hinged to the machine frame 3 and the carrier arm 4, respectively. On one arm 15 a pin 18 is fastened, said pin abutting in the position shown the arm 16, thus preventing further movement. The spring 12 and the string 13 both attack the stopping device close to the point 17 in such a way that the spring 12 tends to make the two arms 15, 16 bend in their common hinge, whereas the string 13 when pulled tries to straighten the arms 15,16. This means that the mower 1 can swing freely relative to the carrier arm 5 as long as the string 13 is not pulled, i.e. when the mower is in its operating position, while pulling of the string 13 will make the arms 15, 16 straighten as shown in Fig. 3 and act like a rigid rod connection between the machine frame 3 and the carrier arm 5, thereby preventing the mower 1 from swinging in the hinge 4.

It is to be understood that even if the invention has here been described in connection with a mower, it may be used in connection with any centre-suspended implement.

It should moreover be understood that though the invention is here described in connection with a machine which swings in a horizontal plane between an operating position and a transport position, the invention can also be used in connection with a machine which swings in a vertical plane between an operating position and a transport position.

## Claims

1. An implement of the type which close to a vertical plane through the mass centre of the implement is hinged to a carrier arm for pivoting around an axis (4) transverse to the carrier arm (5) and which comprises a stopping device for preventing said pivoting, the carrier arm (5) being hinged to a frame connectable with a tractor for swinging between an operating position and a transport position, wherein the stopping device comprises a first member (8; 15) fastened to the implement (1) and a second member (11; 16) fastened to the carrier arm (5), the two members (8, 11; 15, 16) are mutually engaging in such a way that they and in particular their connections with the implement (1) and the carrier arm (5), respectively, are movable relative to each other between two extreme positions, and that they are adapted to take up a mutual position, in which they block the movement, **characterized** in that the stopping device comprises an activating means comprising a string (13) which when pulled acts on at least one of the two members (8; 15, 16) in a direction towards the position, in which the movement is blocked, said string (13) being connected with the frame in such a way that it is pulled when the carrier arm (5) is swung to the transport position.

2. An implement according to claim 1, **characterized** in that the stopping device comprises a spring (12) which acts on at least one of the two members (8; 15, 16) in a direction away from the position, in which the movement is blocked.

3. An implement according to claim 1 or 2, **characterized** in that one of the two members (8) comprises a track (10) with a long leg and a short leg substantially perpendicular to one another, and that said member is hinged to the implement (1) or the carrier arm in such a way that the long leg of the track (10) extends towards the hinge axis of the member (8), and that the short leg of the track extends transversely to the hinge axis of the member (8), and that the second member comprises a pin (11) adapted to engage the track, said pin being stationary relative to the carrier arm (5) or the implement.

## Patentansprüche

1. Gerät der Art, das nahe einer senkrechten Ebene durch den Massenmittelpunkt des Gerätes an einen Tragarm gelenkt ist, zum Schwenken des Gerätes um eine zum Tragarm (5) quer verlaufende Achse (4), und umfassend eine Arretiervorrichtung, die an einem solchen Schwenken hindert, wobei der Tragarm (5) zwecks Schwenken zwischen einer Betriebsstellung und einer Transportstellung an einen mit einem Traktor verbindbaren Rahmen angelenkt ist, und die Arretiervorrichtung ein an das Gerät (1) befestigtes erstes Element (8; 15) und ein an den Tragarm (5) befestigtes zweites Element (11; 16) umfasst, welche beiden Elemente (8, 11; 15, 16) derart ineinander eingreifen, dass sie und insbesondere ihre Verbindungen mit dem Gerät (1) bzw. dem Tragarm (5) im Verhältnis zueinander zwischen zwei Aussenstellungen beweglich sind, und dass sie dazu eingerichtet sind eine gegenseitige Stellung einzunehmen, in welcher sie die Bewegung blockieren, dadurch **gekennzeichnet,** dass die Arretiervorrrichtung ein Aktivierungsorgan mit einer Schnur (13) umfasst, die, wenn man daran zieht, zumindest das eine der zwei Elemente (8; 15, 16) in Richtung zu der Stellung beeinflusst, in der die Bewegung blockiert wird, wobei die Schnur (13) mit dem Rahmen derart in Verbindung steht, dass die Schnur gezogen ist, wenn der Tragarm (5) in die Transportstellung geschwenkt ist.

2. Gerät nach Anspruch 1, dadurch **gekennzeichnet**, dass die Arretiervorrichtung eine Feder (12) umfasst, die zumindest das eine der beiden Elemente (8; 15, 16) in Richtung weg von der Stellung, in der die Bewegung blockiert wird, beeinflusst.

3. Gerät nach Anspruch 1 oder 2, dadurch **gekennzeichnet**, dass das eine der zwei Elemente (8) eine Spur (10) mit einem im wesentlichen rechtwinkelig zueinander angeordneten langen und kurzen Bein umfasst, und dass dieses Element derart an das Gerät (1) oder den Tragarm (5) angelenkt ist, dass das lange Bein der Spur (10) in Richtung zur Gelenkachse des Elements (8) verläuft, und dass das kurze Bein der Spur quer zur Richtung der Gelenkachse des Elements (8) verläuft, und dass das zweite Element einen zum Eingriff in die Spur vorgesehenen Zapfen (11) umfasst, der im Verhältnis zum Tragarm (5) oder Gerät stationär ist.

## Revendications

1. Outil du type qui, à proximité d'un plan vertical passant par son centre de gravité, est articulé sur un bras de support pour pivoter autour d'un axe (4) transversal au bras de support (5) et qui comprend un dispositif d'arrêt pour bloquer ledit pivotement, le bras de support (5) étant articulé sur un cadre, qui peut être relié à un tracteur, pour basculement entre une position de travail et une position de transport, le dispositif d'arrêt comportant une première pièce (8;15) reliée à l'outil (1) et une seconde pièce (11; 16) reliée au bras de support (5), les deux pièces (8, 11; 15, 16) étant en prise l'une avec l'autre de manière telle que ces pièces, en particulier leurs liaisons avec, respectivement, l'outil (1) et le bras de support (5) sont mobiles l'une par rapport à l'autre entre deux positions extrèmes et qu'elles sont conçues pour prendre une position mutuelle dans laquelle elles bloquent le mouvement, **caractérisé** en ce que le dispositif de blocage comporte un moyen d'actionnement constitué par un filin (13) qui, lorsqu'il est tiré, agit sur au moins l'une des deux pièces (8; 15, 16) dans une direction allant vers la position dans laquelle le mouvement est bloqué, ledit filin (13) étant relié au cadre de manière telle qu'il se trouve tiré, lorsque le bras de support (5) bascule vers la position de transport.

2. Outil selon la revendication 1, **caractérisé** en ce que le dispositif de blocage comprend un ressort (12) qui agit sur au moins l'une des deux pièces (8; 15, 16) dans une direction s'éloignant de la position dans laquelle le mouvement se trouve bloqué.

3. Outil selon les revendications 1 ou 2, **caractérisé** en ce que l'une des deux pièces (8) comporte un moyen de guidage (10) comprenant une branche longue et une branche courte, branches essentiellement perpendiculaires l'une à l'autre, et en ce que ladite pièce est articulée sur l'outil (1) ou sur le bras de support de manière telle que la branche longue du moyen de guidage (10) s'étend vers l'axe d'articulation de la pièce (8) et que la branche courte du moyen de guidage s'étend transversalement à l'axe d'articulation de la pièce (8) et en ce que la seconde pièce comporte un téton (11) conçu pour se situer dans le moyen de guidage, ledit téton étant stationnaire par rapport au bras de support (5) ou à l'outil.
